# EUROPEAN PATENT APPLICATION

(11) **EP 3 659 698 A1**
(43) Date of publication of application: **03.06.2020**
(21) Application number: 18213905.5
(22) Date of filing: 19.12.2018
(51) Int. Cl.: B01F 5/10, B01F 5/24, B01F 3/18, B29B 7/32, B29B 7/78

(54) **SILO FOR STORING PET FLAKES**

(30) Priority: 30.11.2018 US 201862774162 P
(71) Applicant: Aladdin Manufactuing Corporation, Calhoun, GA 30701 (US)
(72) Inventor: CLARK, Thomas R., Calhoun, GA Georgia 30701 (US)
(74) Representative: Van Steenlandt, Wim August Maria

(57) **Abstract**

A silo (100) for storing PET flakes comprising
- A container (110) defining an inner space (144),
- at least one supply opening (120) for receiving PET flake being provided near or at the upper side of the container (110),
- at least one discharge opening (122) being provided near or at the lower side of the container (110) in the surface of the container (110),
- a recirculation system (124) coupling said at least one discharge opening (122) to said at least one supply opening (120) of the container (110), for transporting PET flakes from said at least one discharge opening (122) to said supply opening (120);
- an insert (130) located in said inner space (144), the insert (130) having the shape of a capped cone with a top side (132) having a top rim (134) and a bottom side (136) having a bottom rim (138),
- the top side (132) of the insert (130) being oriented towards the upper side of the container (110),
- the bottom rim (138) of the insert (130) being mechanically coupled to the inner surface of the container (110) thereby defining within the container (110) an upper inner space (142) above the insert (130) and a lower inner space (144) below the insert (130),
- the insert (130) having one or more openings (150), such as slits, along its bottom rim (138) for allowing PET flakes to pass from the upper inner space (142 to the lower inner space (144);
the top rim (134) is coupled to an extraction system (160) for extracting PET flakes from the upper inner space (142) towards the exterior of the silo (100).

## Description

### Field of the invention

The present invention relates to silos fit for storing PET flakes obtained by diminution of PET bottles, e.g. by shredding of PET bottles, and a method to store and extract PET flakes from such silo.

### Background of the invention

PET flakes, originating from recycling of PET bottles being shredded, are known. Disadvantage of such flakes is the possible inconsistency in or absence of uniformity of its quality, e.g. varying dimensions, crystallinity and specific weight.

From e.g. EP2748358B1, such flakes are known as raw material for BCF filament yarns, fit for making broadloom carpets. A major point of attention in this production of BCF filament yarns is the consistency of quality of the raw material used to feed the extrusion and spinning process.

### Summary of the invention

This quality starts with the PET flakes fed to the extruder used to melt the flakes to molten recycled PET. The inventors found out that one of the key issues in variation of the PET flakes fed, originates from the silos in which the PET flakes were stored and extracted in order to feed the extruders. Though the PET flakes were supplied to the silos as a substantially uniform stream of flakes, i.e. a mixture of flakes with varying individual properties, but substantially uniform properties as mixed stream, the extracted PET flake stream did no longer have this substantially uniform properties as mixed stream. A kind of demixing was noticed.

The inventors found out that the silo and the method to run the silo according to the invention, remedied this demixing effect to a large extent.

According to a first aspect of the invention, a silo for storing PET flakes is provided, the silo comprising
- A container defining an inner space ,
- at least one supply opening for receiving PET flake being provided near or at the upper side of the container,
- at least one discharge opening being provided near or at the lower side of the container in the surface of the container,
- a recirculation system coupling said at least one discharge opening to said at least one supply opening of the container, for transporting PET flakes from said at least one discharge opening to said supply opening;
- an insert located in said inner space, the insert having the shape of a capped cone with a top side having a top rim and a bottom side having a bottom rim,
- the top side of the insert being oriented towards the upper side of the container,
- the bottom rim of the insert being mechanically coupled to the inner surface of the container thereby defining within the container an upper inner space above the insert and a lower inner space below the insert ,
- the insert having one or more openings, such as slits, along its bottom rim for allowing PET flakes to pass from the upper inner space to the lower inner space;
- the top rim is coupled to an extraction system for extracting PET flakes from the upper inner space towards the exterior of the silo.

PET mean polyethylene terephthalate. The PET flakes refer to flakes mainly comprising polyethylene terephthalate, optionally further comprising other polymers of copolymers.

Possibly the container is open at its top side or is closed at its top side by means of a closing lid or cover.

According to some embodiments, the container may define the inner space by having an upper cylindrical part and a lower conical part.

The silo may have a hopper-like shape. The lower conical part is oriented with its top of the conical shape downwards.

According to some embodiments, the bottom rim may be mechanically coupled to the inner surface of the container at the transition between the upper cylindrical part and the lower conical part. As an alternative, the bottom rim may be mechanically coupled to the inner surface of the container at a position along the upper cylindrical part. Possibly the distance between the transition between conical and cylindrical part, and the mechanical coupling, is between 0 and 1 meter.

According to some embodiments, the bottom rim may be mechanically coupled to the inner surface of the container at a position along the conical part.

Preferably, the mechanical coupling is positioned at a height along the axis of the conical part, which height is between 10 and 75 % of the total height of the conical shape of the conical part, such as between 25 and 60 %, e.g. between 45 and 55% wherein a height" being zero " along the axis of the conical part is the position at the transition between conical and cylindrical part.

According to some embodiments, the extraction system may comprise an extraction duct coupled to the upper rim .

Possibly the extraction duct intersects with the lower conical part of the container at the top of the conical shape of the conical lower part. Preferably the capped conical shape of the insert, the cylindrical and conical part of the silo and the extraction duct are coaxially mount.

Alternatively, the extraction duct system comprises an extraction duct which passes through the surface of the conical part of the container at position, different from the top of the conical shape of the conical lower part.

According to some embodiments, the cylindrical part may have a diameter in the range of 6 to 12 feet. More preferred, the cylindrical part has a diameter in the range of 7 to 10 feet, such as 8 feet.

According to some embodiments, the silo may comprise a supply duct for supplying fresh PET flakes.

According to some embodiments, one discharge opening is provided at the top of the conical part of the container.

In this case the conical part hence has the shape of a capped cone, the discharge opening being the rim at the top of this capped conical shape.

According to some embodiments, 2 or more than 2, such as at least 3 discharge openings are provided, substantially equally spread along the circumference of the container.

More preferred, the silo has 4 or more discharge openings, such as 4, 5, 6, 7, 9 or even 10 discharge openings. Preferably each discharge opening is coupled to the recirculation system, e.g. by its own discharge duct.

Preferably the supply opening for supplying the fresh PET flakes is situated at the top of the silo. Most preferred this supply opening is provided in the lid or cover of the container, if any. The supply opening may be coaxial with the vertical axis of the container and/or coaxial with the axis of the capped cone shape of the insert.

In the alternative, the container is open at its upper side. The supply opening in this case is defined by the upper rim of the container

According to some embodiments, the silo may comprise at least a first supply opening coupled to the supply duct and one or more further supply openings being coupled to the one or more discharge openings.

Optionally, each discharge opening is coupled to its own supply opening such that the PET flakes from this discharge opening is transported, hence to this one supply opening, hence the flakes being recirculated.

According to some embodiments, the at least one discharge opening may be coupled to said at least one supply opening by means of a bucket conveyor system.

According to some embodiments, the volume of the inner space above the insert may be more than 10 times the volume of the inner space below the insert.

More preferred, the volume of the inner space above the insert is more than 25 times, even more than 50 or even more than 100 times the volume of the inner space below the insert.

According to some embodiments, the openings along the bottom rim of the insert may have a total surface of 4 to 15 feet²

More preferred, the openings along the bottom rim of the insert have a total surface of 4 to 10 feet².

According to some embodiments, the opening defined by the top rim may be 5 to 20 %of the surface of the cross section of the inner space defined by the plane with which the opening defined by the top rim is coplanar with.

More preferred, the opening defined by the top rim is 2.6 to 10% of the surface of the cross section of the inner space defined by the plane with which the opening defined by the top rim is coplanar with.

According to some embodiments, the surface of the opening defined by the top rim may be 25 to 75% of the surface of the total surface of openings along the bottom rim of the insert.

More preferred, the surface of the opening defined by the top rim is 30 to 55% of the surface of the total surface of openings along the bottom rim of the insert.

According to some embodiments, the capped cone may have an inclination angle β between its surface and its axis of 30 to 60 °. More preferred, the capped cone has an inclination angle β between its surface and its axis of 35 to 50 ° such as 45°.

A silo comprising a container of which the inner space is defined by an upper cylindrical part and a lower conical part, preferably has a conical part of which the inclination angle α of its surface with its axis is in the range of 35 to 70 °, such as in a range of 40 to 60°.

Most preferred, the inclination angle α of the capped cone shape and the inclination angle of the conical part of the container are substantially equal.

It is understood that the inclination angle is the smallest angle between the axis and the surface.

According to some embodiments, the height of the container above the mechanical coupling of the insert to the inner surface of the container may be between 30 and 60 feet. More preferred, the height of the container above the mechanical coupling of the insert to the inner surface of the container is between 40 and 55 feet.

According to some embodiments, the height of the container below the mechanical coupling of the insert to the inner surface of the container may be between 1 and 5 feet. More preferred, the height of the container below the mechanical coupling of the insert to the inner surface of the container is between 1.5 and 4 feet.

The silos according to the invention have the advantage that the demixing tendency when the silo is in use, is to a large extent avoided. The flakes discharged from the discharge openings under the insert, are recycled and added to the fresh PET flake stream. This stream is believed to be comprise to a larger extent coarse and heavy flakes, which tend to move to the side of the container, while less heavy or smaller particles are believed to stay rather in the middle of the silo. By increasing the heavy or coarse part of the flakes, the percentage of coarse or heavy flakes in the stream taken out of the silo in the middle of the silo through the opening defined by the upper rim of the insert will increase and come to a stable throughput of all flakes, slammer and largen, heavier or lighter.

According to a second aspect of the invention, a method to extract PET flakes from a silo is provided, the method comprising the steps of
- providing a silo according to the first aspect of the invention;
- feeding fresh PET to said silo via a supply opening;
- simultaneously extracting PET flakes via the top rim and the discharge openings ;
- recirculating the PET flakes extracted via the discharge openings to the silo via a supply opening.

According to some embodiments, the volume per hour ratio of the volume of PET flakes extracted via the top rim to the volume of PET flakes extracted via the one or more discharge openings may be in the range of 1/25 to 1/1, preferably in the range of 1/20 to 1/1.25.

According to some embodiments, the volume per hour extracted via the top rim substantially equals the volume per hour of the feeding fresh PET to said silo via a supply opening

According to some embodiments, the PET flakes are flakes obtained by diminution of PET bottles.

This diminution may be shredding of PET bottles, thereby providing "recycled PET" flakes.

The PET flakes typically have dimensions from about 4 cm² to about 0.25 cm², and the density of the flakes also varies largely, dependent from the part of the bottle the flake originates. The bulk density of the flakes may vary between about 10 pound per cubic feet to 25 pound per cubic feet.

The independent and dependent claims set out particular and preferred features of the invention. Features from the dependent claims may be combined with features of the independent or other dependent claims, and/or with features set out in the description above and/or hereinafter as appropriate.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

Figure 1 is a schematically view of a silo according to the first aspect of the invention.
Figure 2 is schematically view of a silo according to the first aspect of the invention.

The same reference signs refer to the same, similar or analogous elements in the different figures.

### Description of illustrative embodiments

The present invention will be described with respect to particular embodiments. It is to be noticed that the term "comprising", used in the claims, should not be interpreted as being restricted to the means listed thereafter; it does not exclude other elements or steps. It is thus to be interpreted as specifying the presence of the stated features, steps or components as referred to, but does not preclude the presence or addition of one or more other features, steps or components, or groups thereof. Thus, the scope of the expression "a device comprising means A and B" should not be limited to devices consisting only of components A and B. It means that with respect to the present invention, the only relevant components of the device are A and B.

Throughout this specification, reference to "one embodiment" or "an embodiment" are made. Such references indicate that a particular feature, described in relation to the embodiment is included in at least one embodiment of the present invention. Thus, appearances of the phrases "in one embodiment" or "in an embodiment" in various places throughout this specification are not necessarily all referring to the same embodiment, though they could.

Furthermore, the particular features or characteristics may be combined in any suitable manner in one or more embodiments, as would be apparent to one of ordinary skill in the art.

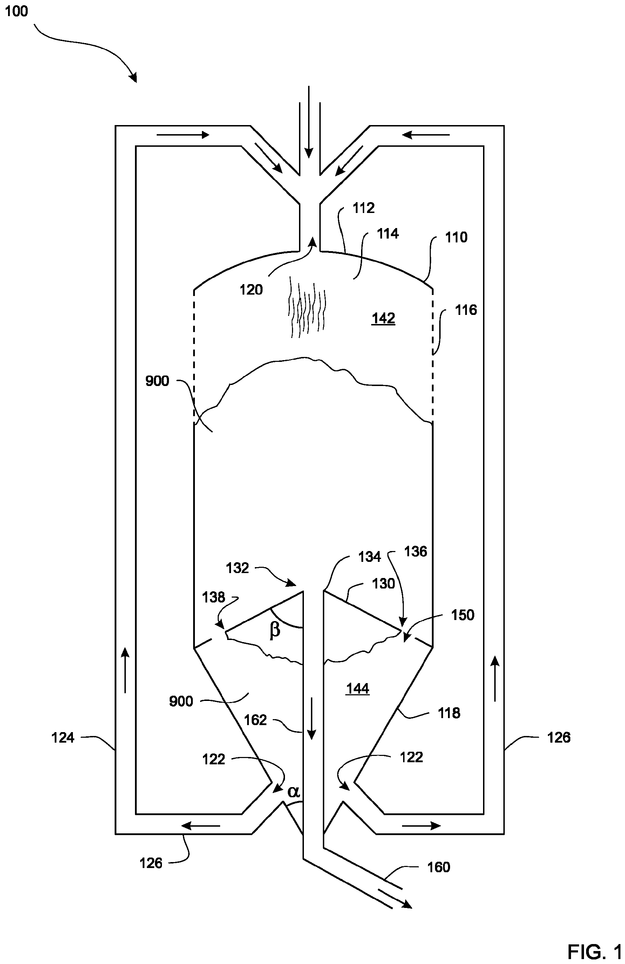

A silo 100 for storing PET flakes 900 is shown in figure 1. The silo 100 comprises a container 110 defining an inner space. The container 110 is closed at its top side by means of a closing lid 112 .

The container defines the inner space 114 by having an upper cylindrical part 116 and a lower conical part 118. The lower conical part 118 is oriented with its top of the conical shape downwards. The silo 100 has a hopper-like shape. As an example, the cylindrical part has a diameter of 8 ft. The height of the cylindrical part may e.g. be 56ft . The height of the conical part may be 7ft and the inclination angle α is 30°.

The container 100 has at least one supply opening 120 for receiving PET flake being provided at the upper side of the container and is centrally positioned. As such the supply opening is coaxial with the axis of the cylindrical and conical part of the container. The silo comprises a supply duct 121 for supplying fresh PET flakes. The supply duct, for supplying the fresh and recirculated PET flakes is situated at the top of the silo 100, in this embodiment in the lid 112 of the container.

Four discharge openings 122 are provided the lower side of the container 110 in the surface of the container, in this embodiment in the conical part 118 of the container 110. The four openings are equally distributed at the conical part 118 of the container 110. Via a recirculation ducting system 124 , the discharge openings 122 are coupled to the supply opening 120. This system is provided with means (not shown) to transport the flakes using air current. Each discharge opening 122 is coupled to its own discharge duct 126. All discharge openings 122 and the supply duct 121 are coupled to one supply opening 120. The discharge openings having a circular shape with diameter of 12 inch, the ducts 126 coupled to these openings having the same diameter.

The silo 100 further comprises an insert 130 located in the inner space 114, which insert 130 has the shape of a capped cone with a top side 132 having a top rim 134 and a bottom side 136 having a bottom rim 138. The top side 132 of the insert 130 is oriented towards the upper side of the container 110. The capped cone has an inclination angle β between its surface and its axis of about 55 °

The bottom rim 138 of the insert 130 is mechanically coupled to the inner surface of the container 100 by means of a limited number of studs, e.g. 4 studs. As such an upper inner space 142 above the insert 1230 and a lower inner space 144 below the insert 130 is defined. The bottom rim 138 is mechanically coupled to the inner surface of the container 100 at the transition between the upper cylindrical part 116 and the lower conical part 118.

Preferably the whole container and the ducting systems are made of steel. The mechanical coupling can be a welding.

The volume of the inner space 142 above the insert 130 is about 14 times of the volume of the inner space 144 below the insert 130.

The insert 130 has a plurality of openings 150 along its bottom rim 138 for allowing PET flakes to pass from the upper inner space 142 to the lower inner space 144.

The top rim 134 is coupled to an extraction duct system 160 for extracting PET flakes from the upper inner space 142 towards the exterior of the silo. The extraction duct system 160 comprises an extraction duct 162 coupled to the upper rim 134 of the insert 130 while the extraction duct 162 intersects with the lower conical part 118 of the container 110 at the top of the conical shape of the conical lower part 118.

The opening defined by the top rim 134 has a diameter of 12", the duct 162 coupled to this opening 138 having the same diameter.

The capped conical shape of the insert 130, the cylindrical 116 and conical part 118 of the silo, the supply opening 120 and the extraction duct of the extraction ducting system 160 are coaxially mount.

As an alternative, the bottom rim may be mechanically coupled to the inner surface of the container at a position along the upper cylindrical part, such that the distance between the transition between conical and cylindrical part, and the mechanical coupling, is between 0 and 3 ft.

The bottom rim 138 of the insert 130 is coupled to the container with four studs positioned radially equidistant one from the other. The openings 150 along the bottom rim 138 of the insert 130 have a slit shape with width of about 6 inch. The total surface of these openings is about 12 ft².

In steady state operation, the container is filled with PET fakes. Fresh PET flakes, e.g. flakes of PET obtained by recycling PET bottles are provided to the container 100 via opening 120 and duct 121. At the bottom of the container, PET flakes are extracted via opening 134 and duct 162, preferably the same volume rate per hour as is applicable for the fresh PET flake feed.

Via discharge openings 122, PET flakes are recycled by extraction through these openings, and recycling them to the supply opening 120.

The volume per hour ratio of the volume of PET flakes extracted via the top rim opening 134 to the volume of PET flakes extracted via the one or more discharge openings 122 is in the range of 1/25 to 1/1, preferably in the range of 1/20 to 1/1.25. As an example, the volume per hour ratio of the volume of PET flakes extracted via the top rim opening 134 is about 40000 pound per hour, whereas the volume of PET flakes extracted via the discharge openings 122 is 8000 pounds per hour.

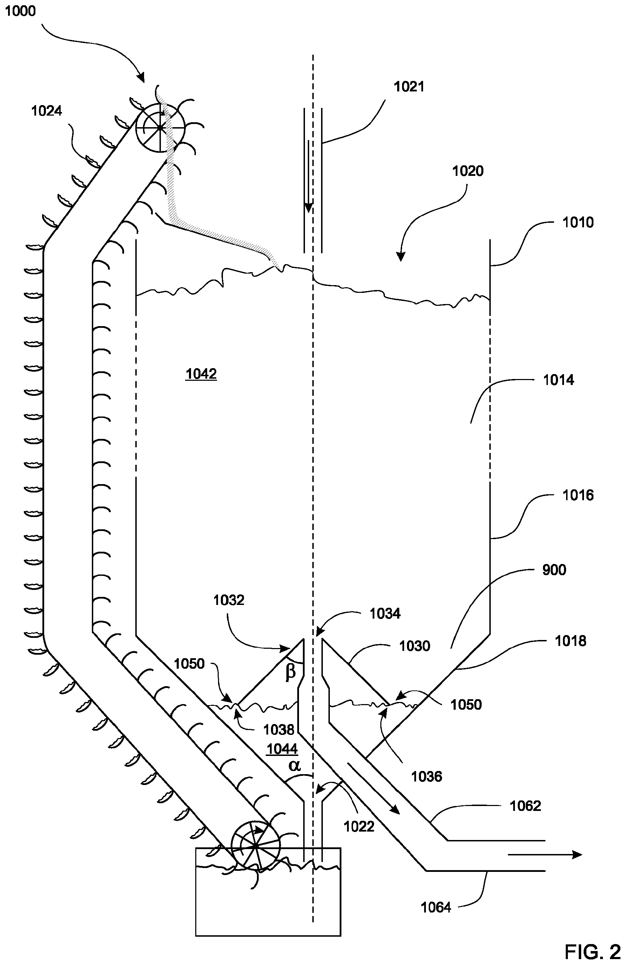

Another silo 1000 for storing PET flakes 900 is shown in figure 2. The silo 1000 comprises a container 1010 defining an inner space. The container 1010 is open at its top side.

The container defines the inner space 1014 by having an upper cylindrical part 1016 and a lower conical part 1018 . The lower conical part 1018 is oriented with its top of the conical shape downwards. The silo 1000 has a hopper-like shape. As an example, the cylindrical part has a diameter of 8 ft. The height of the cylindrical part may e.g. be 46 ft. The height of the conical part may be 4 ft and the inclination angle α is 45°.

The open top of the container 1000 provides one supply opening 1020 for receiving PET flake being provided at the upper side of the container. The silo comprises a supply duct 1021 for supplying fresh PET flakes. The supply duct, for supplying the fresh and recirculated PET flakes is situated at the top of the silo 1000.

One discharge openings 1022 is provided at the lower side of the container 1010, in this embodiment at the top of the conical part 1018 of the container 1010. Via a recirculation system 1024 comprising a bucket conveyor system 1026 , the discharge opening 1022 is coupled to the supply opening 1020, being the open top of the cylindrical part 1016. The discharge openings has a circular shape with diameter of 12 inch.

The silo 1000 further comprises an insert 1030 located in the inner space 1014, which insert 1030 has the shape of a capped cone with a top side 1032 having a top rim 1034 and a bottom side 1036 having a bottom rim 1038. The top side 1032 of the insert 1030 is oriented towards the upper side of the container 1010. The capped cone has an inclination angle β between its surface and its axis of 45°

The bottom rim 1038 of the insert 1030 is mechanically coupled to the inner surface of the container 1000 with four studs radially equally distant one from the other. As such an upper inner space 1042 above the insert 1230 and a lower inner space 1044 below the insert 1030 is defined. The bottom rim 1038 is mechanically coupled to the inner surface of the conical part 1018 of the container 1000 at a height along the axis of the conical part, which height is about 50 % of the total height of the conical shape of the conical part 1018.

Preferably the whole container and the ducting systems are made of steel. The mechanical coupling can be a welding.

The insert 1030 has 4 slit-shaped openings 1050 along its bottom rim 1038 for allowing PET flakes to pass from the upper inner space 1042 to the lower inner space 1044.

The top rim 1034 is coupled to an extraction duct system 1060 for extracting PET flakes from the upper inner space 1042 towards the exterior of the silo. The extraction duct system 1060 comprises an extraction duct 1062 coupled to the upper rim 1034 of the insert 1030 while the extraction duct 1062 intersects with the lower conical part 1018 of the container 1010 along the side of the conical part 1018.

The opening defined by the top rim 1034 has a diameter of 12 inches, the duct 1062 coupled to this opening 1038 having initially the same diameter, and broadens up to 24 inches further downstream.

The capped conical shape of the insert 1030, the cylindrical 1016 and conical part 1018 of the silo, the supply opening 1020, the discharge opening 1022 of the recirculation ducting system 1024 and the extraction duct 1062 of the extraction ducting system 1060 are coaxially mount.

The openings 1 50 along the bottom rim 1 38 of the insert 1030 have a slit like shape with width of about 6 inches.

In steady state operation, the container is filled with PET fakes. Fresh PET flakes, e.g. flakes of PET obtained by recycling PET bottles are provided to the container 1000 via the opening 1020 at the top of the container and duct 1021. At the bottom of the container, PET flakes are extracted via opening 1034 and duct 1062, preferably the same volume rate per hour as is applicable for the fresh PET flake feed.

Via discharge openings 1022, PET flakes are recirculated by extraction through these openings, and recycling them to the supply opening 1020.

The volume per hour ratio of the volume of PET flakes extracted via the top rim opening 1034 to the volume of PET flakes extracted via the one or more discharge openings 1022 is in the range of 1/25 to 1/1, preferably in the range of 1/20 to 1/1.25. As an example, the volume per hour ratio of the volume of PET flakes extracted via the top rim opening 1034 is about 40000 pound per hour, whereas the volume of PET flakes extracted via the discharge openings 1022 is 8000 pounds per hour.

It is to be understood that although preferred embodiments and/or materials have been discussed for providing embodiments according to the present invention, various modifications or changes may be made without departing from the scope and spirit of this invention.

## Claims

1. Silo for storing PET flakes comprising
∘ A container defining an inner space ,
∘ at least one supply opening for receiving PET flake being provided near or at the upper side of the container,
∘ at least one discharge opening being provided near or at the lower side of the container in the surface of the container,
∘ a recirculation system coupling said at least one discharge opening to said at least one supply opening of the container, for transporting PET flakes from said at least one discharge opening to said supply opening;
∘ an insert located in said inner space, the insert having the shape of a capped cone with a top side having a top rim and a bottom side having a bottom rim,
∘ the top side of the insert being oriented towards the upper side of the container,
∘ the bottom rim of the insert being mechanically coupled to the inner surface of the container thereby defining within the container an upper inner space above the insert and a lower inner space below the insert ,
∘ the insert having one or more openings, such as slits, along its bottom rim for allowing PET flakes to pass from the upper inner space to the lower inner space;
∘ the top rim is coupled to an extraction system for extracting PET flakes from the upper inner space towards the exterior of the silo.

2. A silo according to claim 1, wherein, the container defines the inner space by having an upper cylindrical part and a lower conical part.

3. A silo according to claim 2, wherein the bottom rim is mechanically coupled to the inner surface of the container at the transition between the upper cylindrical part and the lower conical part.

4. A silo according to claim 2, wherein the bottom rim is mechanically coupled to the inner surface of the container at a position along the conical part.

5. A silo according to any one of claims 2 to 4, wherein the extraction system comprises an extraction duct coupled to the upper rim .

6. A silo according to any one of claims 2 to 5 wherein the cylindrical part has a diameter in the range of 6 to 12 feet.

7. A silo according to any one of the preceding claims, wherein the silo comprises a supply duct for supplying fresh PET flakes.

8. A silo according to any one of the preceding claims, wherein the volume of the inner space above the insert is more than 10 times the volume of the inner space below the insert.

9. A silo according to any one of the preceding claims, wherein the openings along the bottom rim of the insert have a total surface of 4 to 15 feet².

10. A silo according to any one of the preceding claims, wherein the opening defined by the top rim is 5 to 20 % of the surface of the cross section of the inner space defined by the plane with which the opening defined by the top rim is coplanar with.

11. A silo according to any one of the preceding claims, wherein the height of the container above the mechanical coupling of the insert to the inner surface of the container is between 30 and 60 feet.

12. A silo according to any one of the preceding claims, wherein the height of the container below the mechanical coupling of the insert to the inner surface of the container is between 1 and 5 feet.

13. A method to extract PET flakes from a silo, the method comprising the steps of
∘ providing a silo according to any one of the claims 1 to 12;
∘ feeding fresh PET to said silo via a supply opening;
∘ simultaneously extracting PET flakes via the top rim and the discharge openings ;
∘ recirculating the PET flakes extracted via the discharge openings to the silo via a supply opening.

14. A method according to claim 13, wherein the volume per hour ratio of the volume of PET flakes extracted via the top rim to the volume of PET flakes extracted via the one or more discharge openings is in the range of 1/1 to 1/25.

15. A method according to any one of the claims 13 to 14, wherein the volume per hour extracted via the top rim substantially equals the volume per hour of the feeding fresh PET to said silo via a supply opening.
